# EUROPEAN PATENT SPECIFICATION

(11) **EP 2 638 955 B1**
(45) Date of publication and mention of the grant of the patent: **23.11.2016**
(21) Application number: 12250056.4
(22) Date of filing: 14.03.2012
(51) Int. Cl.: B01F 7/00, B01F 13/00, B29C 45/14, B01F 15/00

(54) **Apparatus for mixing the content of a receptacle**
Vorrichtung zum Mischen des Inhalts eines Behälters
Dispositif de mélange pour mélanger le contenu d'un récipient

(43) Date of publication of application: 18.09.2013
(73) Proprietor: Challenging Innovation Limited, Whitney Bay Tyne and Wear NE26 2NA (GB)
(72) Inventor: McClarence Anthony, Newcastle upon Tyne (GB)
(74) Representative: Hutchinson, Claire Louise

(56) References cited:
- EP-A1- 0 358 883
- EP-A1- 1 724 008
- DE-C- 206 933
- GB-A- 2 463 489
- US-A- 2 896 925
- US-A- 3 455 540
- US-A- 3 559 962
- US-A- 3 734 643
- US-A- 3 764 101
- US-A- 5 584 112
- US-A1- 2004 145 966
- US-A1- 2005 088 907
- US-B1- 6 247 837

## Description

The present invention relates to apparatus for mixing contents of a receptacle. It is known to mix the contents of a receptacle, which may, for example, be paint, wallpaper paste, cement, foodstuffs or pharmaceuticals, using a stick, rod or other pole-like implement. However, such existing implements for mixing do not provide a good level of mixing. Where the contents are, for example, paint, a gyroscope may be used to mix the paint in the paint tin.

US 6,247,837 discloses a device for use in stirring liquid within a container which container has an opening with a smaller circumference than a circumference of a body of the container. GB 2,463,489 discloses a mixing device comprising an engagement section, having an engagement means adapted to engage with a rotatable element; and at least one resiliently deformable mixing blade, wherein the at least one resiliently deformable mixing blade is configured to deform under centrifugal force. US 5,584,112 discloses a process for the production of a whisk for an electric kitchen beater, comprising a rod having at one of its ends a hub carrying at least two loops each forming an agitator and made from a metallic wire whose ends are secured to the hub, the hub being produced by an over-molding operation by injection of a plastic material onto the rod and onto the two loops adjacent the rod.

According to an aspect of the present invention, there is provided an apparatus for mixing contents of a receptacle, the apparatus comprising a rotary shaft equipped at a proximal end with a connection for removable attachment to a means of providing rotation, the rotary shaft having a mixing element fixedly connected at a distal end of the shaft opposite to the proximal end, the mixing element comprising at least two arms, wherein the at least two arms are retractable when in a resting position or extendable radially outwardly when in an operative rotating position, characterised in that the mixing element further comprises a corkscrew neck positioned above the at least two arms and a collar positioned above the at least two arms and beneath the corkscrew neck. The means of providing rotation may comprise a handheld drill or an electric screwdriver.

The invention will now be described by way of example only, with reference to the accompanying drawings, of which:
Figure 1 shows a vehicle part being painted;
Figure 2a shows a person mixing paint using a rod and Figure 2b shows a gyroscope for mixing paint;
Figure 3 shows a perspective view of apparatus of the prior art;
Figure 4 shows a perspective view of apparatus of the prior art in conjunction with a handheld drill;
Figure 5 shows two representations of the anchor nut for attaching the rotary shaft to the mixing element, embodying the present invention;
Figure 6 shows a perspective view of the claimed apparatus with three holes in the rotary shaft, embodying the present invention;
Figure 7 shows a perspective view of the claimed apparatus embodying the present invention;
Figure 8 shows two representations of a portion of the apparatus embodying the present invention;
Figure 9 shows a perspective view of a second embodiment of the claimed invention; and
Figure 10 shows an alternative perspective view of a second embodiment of the claimed invention.

### Figure 1 (Prior art)

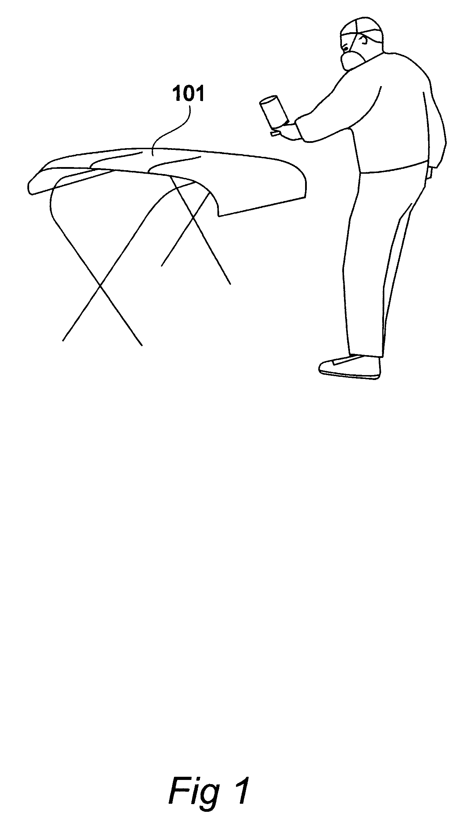

A vehicle part **101** being painted is shown in Figure 1. There is a problem, however, in that painted vehicle parts may rust prematurely. In such situations, a thickness test can usually reveal the cause of the problem, which is in most cases due to insufficient solids content in the paint. This in turn is because the paint has not been mixed correctly. In many other circumstances, paint is also not mixed sufficiently, leading to problems when the paint is applied.

### Figure 2 (Prior art)

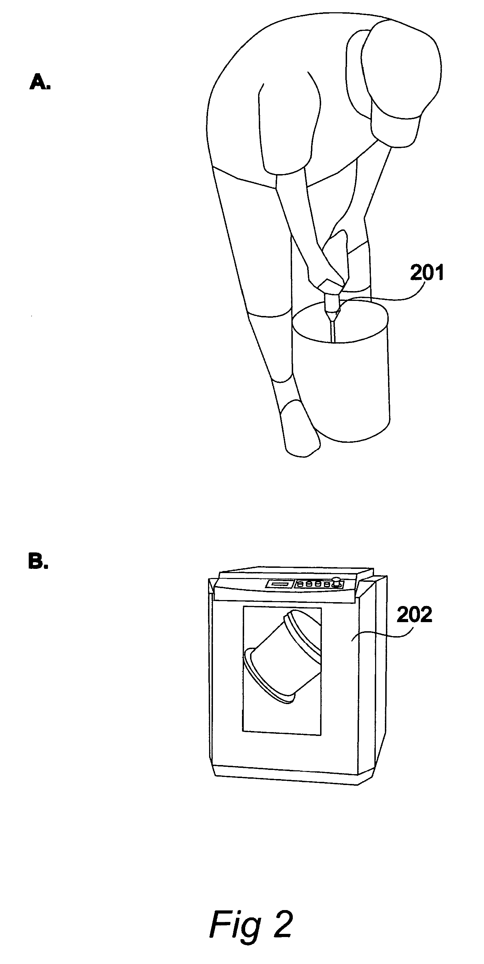

Current methods for mixing paint include using sticks or rods **201**, as shown in Figure 2a. However, such methods merely mark the bottom of the paint tin and do not give good mixing of the paint around the internal periphery of the tin. Furthermore, the lid must be taken off the paint tin in order for the paint to be mixed, which allows unwanted particulate matter such as dust or dirt to enter the tin and contaminate the paint. Paint can alternatively be mixed by putting the paint in a gyroscope **202**, as shown in Figure 2b, but gyroscopes are prohibitively expensive for many organisations. Alternatively, it is known to roll the paint tins around on the floor (not shown) to try and achieve mixing, but again, this does not yield good results.

These current methods for mixing paint are clearly unsatisfactory, and therefore there is a need for a device that can mix paint, as well as other substances, for example, plaster, wallpaper paste, cement and foodstuffs.

### Figure 3 (Prior art)

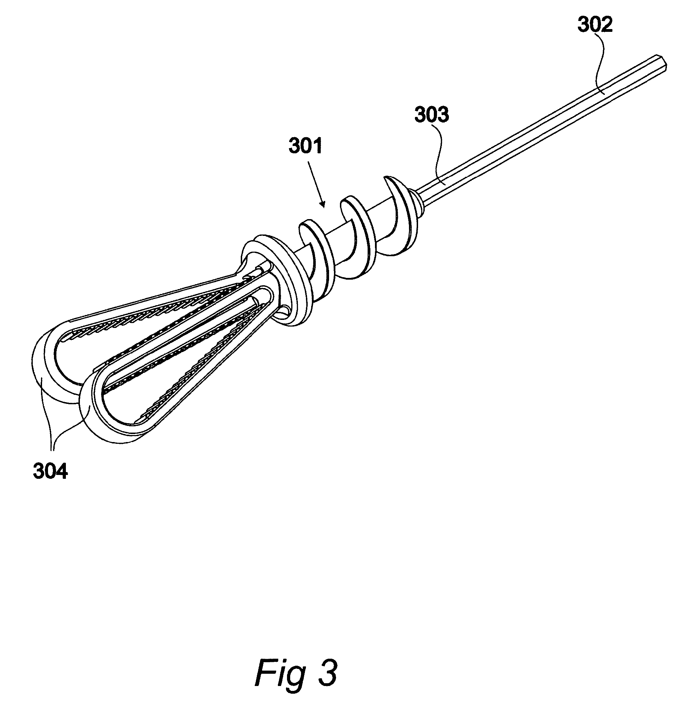

Apparatus **301** of the prior art is shown in Figure 3. Apparatus **301** relates to a device that is inserted through the bung or plug in the lid of a tin of paint. The apparatus **301** comprises a shaft having a proximal end **302** and a distal end **303**. The proximal end **302** of the shaft may be attached to a handheld drill or an electric screwdriver which provides rotational movement of the shaft. The handheld drill may, for example, be a two or three speed cordless drill. The distal end of the shaft **303** has at least two parallel arms **304** which spread out like a propeller when the handheld drill or an electric screwdriver is operated. The at least two parallel arms **304** may also be known as blades or loops. The operation of the handheld drill or an electric screwdriver thus causes the at least two arms **304** to extend radially outwardly under centrifugal force. When the handheld drill or an electric screwdriver is switched off, the at least two arms **304** move back down to their resting position. In their resting position, the at least two arms **304** overlap with each other to a slight degree, as can be seen in Figure 3. When the at least two arms **304** spread out, they draw the paint (or other material such as plaster) inwardly to the centre of the receptacle in which the contents are being mixed. Therefore, paint (or other material such as plaster) is not left unmixed in the internal periphery of the paint tin. The at least two arms **304** are made from flexible material and allow contact with the mixing vessel which reduces input from the user during mixing, reduces contamination of the mix from unmixed compound and also advantageously reduces cost and waste since every compound is mixed and is useable.

### Figure 4 (Prior art)

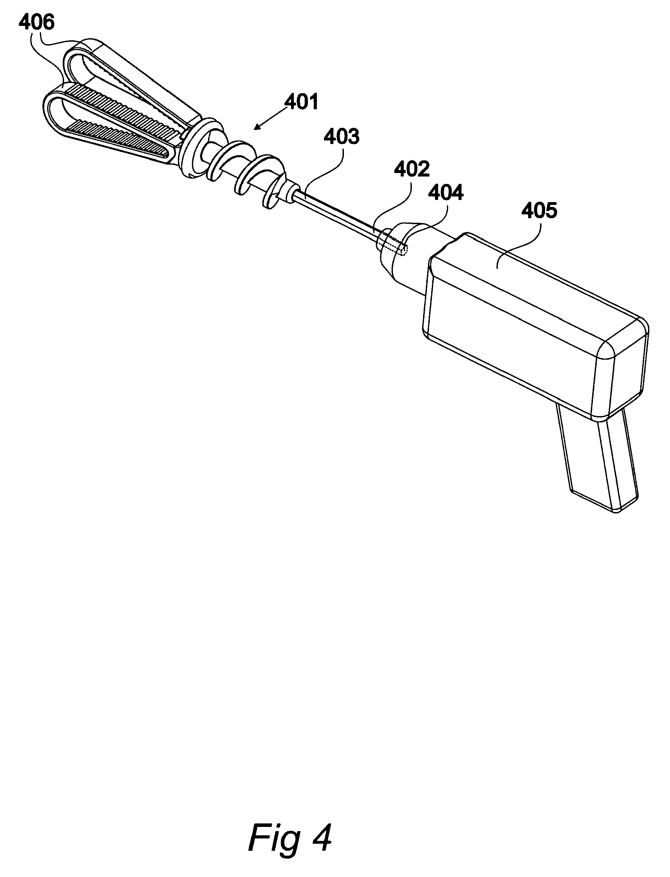

Figure 4 shows a perspective view of apparatus **401** in conjunction with a handheld drill **405**.

Apparatus **401** comprises a rotary shaft having a proximal end **402** and a distal end **403**. The rotary shaft is capable of rotation. The proximal end **402** of the shaft is adapted with a connection **404** to allow the proximal end **402** to be attached to a handheld drill **405** or an electric screwdriver. The handheld drill may, for example, be a two or three speed cordless drill. Connection **404** at the proximal end of the shaft is suitable for industry standard power tool fitting, making it compatible with most professional and domestic power units. The proximal end of the rotary shaft may be easily and quickly connected and disconnected to the handheld drill or an electric screwdriver.

When power is supplied to either the handheld drill **405** or an electric screwdriver, the rotation of either the handheld drill or electric screwdriver causes rotation of the attached rotary shaft. The distal end **403** of the rotary shaft comprises at least two arms **406** which extend radially outwardly under centrifugal force when the rotary shaft is rotated by the handheld drill **405** or electric screwdriver. The at least two arms **406** are preferably made from a flexible material, and therefore under load they extend and rise to form a blade that is able to mix compounds to the required consistency and with minimal input from the user. Upon cessation of the rotary action from the handheld drill **405** or electric screwdriver, the at least two arms **406** move down to their resting position. This makes the arms **406** easy to store and clean. In their resting position, the at least two arms **406** overlap with each other to a slight degree, as can be seen in Figure 4.

### Figure 5

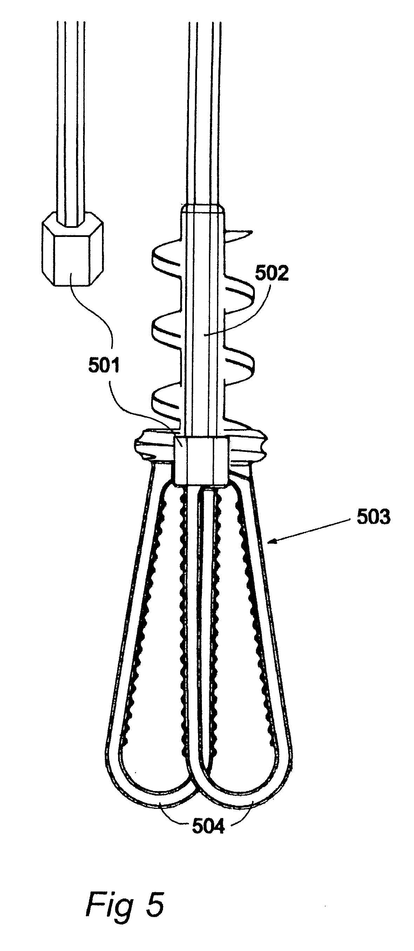

Two representations of the anchor nut **501** for attaching the rotary shaft **502** to the mixing element **503** embodying the present invention are shown in Figure 5. The anchor nut **501** is an extension of the shaft **502** that attaches to the main mixing element **503**, and anchor nut **501** also provides strength and durability to the apparatus.

The rotary shaft **502** is ideally fabricated from a metal such as aluminium or steel, but may also be made from plastic. Rotary shaft **502** may be ten millimetres in cross-sectional diameter. Main mixing element **503** comprises at least two arms **504** which are preferably fabricated from a heavy nylon. However, alternative materials may be used such as any suitable plastic.

The rotary shaft **502** may be fixed to the mixing element **503** by anchor nut **501** which is bonded in to the apparatus during fabrication. During the fabrication process, anchor nut **501** is inserted onto the distal end of rotary shaft **502** and then these two components are placed in the apparatus mould configured to form mixing element **503**. Molten plastic or nylon is added to the mould and once the molten plastic or nylon sets, rotary shaft **502** is bonded to mixing element **503** via anchor nut **501**. Anchor nut **501** may be hexagonal in nature, and where a hexagonal anchor nut **501** is used, a rotary shaft **502** having a hexagonal cross-section is also used. However, alternatively shaped nuts may be used in association with appropriately shaped rotary shafts. In an embodiment, hexagonal anchor nut **501** may be fifteen millimetres in both cross-sectional diameters.

### Figure 6

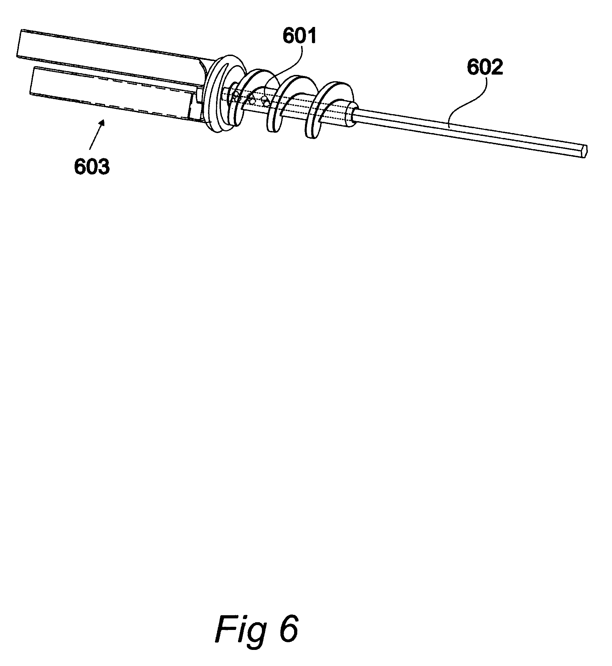

Figure 6 shows part of the claimed apparatus with three holes **601** in the rotary shaft, embodying the present invention. As an alternative method of manufacture to the anchor nut method shown in Figure 5 and described above, rotary shaft **602** may be attached to mixing element **603** via a plurality of holes drilled into the rotary shaft **602** before rotary shaft **602** is placed into the apparatus mould configured to form mixing element **603**. There may be any number of drilled holes in the shaft, but an optimum number of holes is three. The holes are drilled across the entire width of rotary shaft **602** and in an embodiment, each drilled hole **601** may be two and a half millimetres in diameter. Holes **601** are also known as fixing points.

Rotary shaft **602** configured with drilled holes is placed into the apparatus mould configured to form mixing element **603**. Molten plastic or nylon is added to the mould and then the molten material flows through drilled holes **601** in rotary shaft **601**. Once the molten plastic or nylon sets, rotary shaft **602** is bonded to mixing element **603** via the hardened plastic or nylon in the holes **601**. This alternative method of fabrication thus eliminates the need for a separate anchor nut and advantageously, the device can be moulded in one piece.

### Figure 7

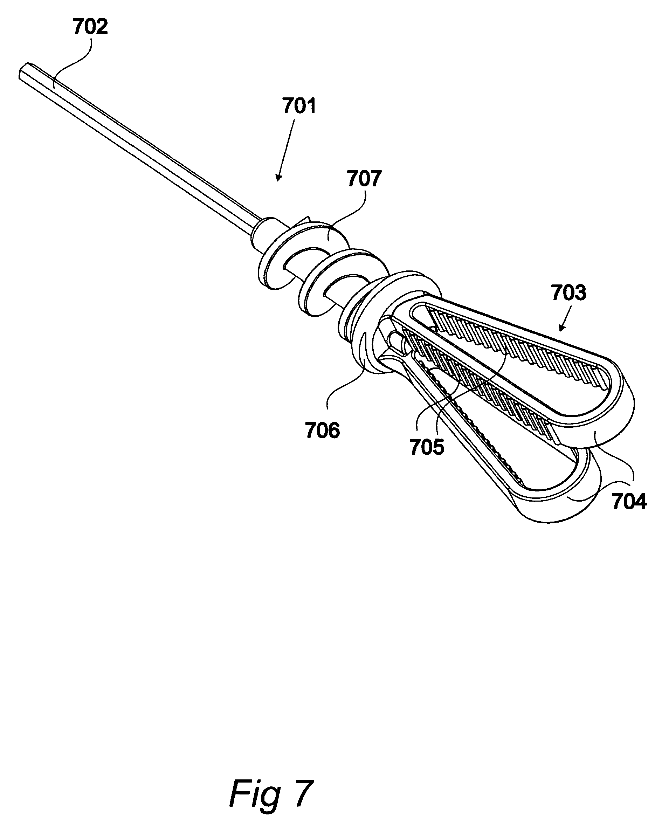

Figure 7 shows a perspective view of the claimed apparatus **701** embodying the present invention comprising a rotary shaft **702** and a mixing element **703**. Mixing element **703** comprises at least two arms **704** configured with a ribbed surface **705**, which serves to create resistance and turbulence in the mixing vortex and enhance the mixing process. Ribbed surfaces **705** also act as an agitant, and help to break down any pockets of ingredients to give a consistent viscosity in the mix. The at least two arms may be shaped as ovoidal loops, and may be known as loops. In an embodiment, each of the at least two loops **704** has a ribbed surface **705** on one outer surface and on one inner surface, as shown in Figure 7. Ribbed surface **705** may alternatively be rippled or grooved or comprise bumps.

Apparatus **701** embodied by the present invention comprises two additional features which help to prevent paint or plaster or whatever substance is being mixed from moving up rotary shaft **702** when apparatus **701** is in operation. In an embodiment, the portion of rotary shaft **702** that sits immediately above the at least two arms **704** is formed as a collar **706** with a channelled cut out region designed to assist the at least two arms **704** in cutting through the mixture or components in the few moments prior to the arms extending and forming a blade as the apparatus is loaded under pressure. The corkscrew nature of the collar helps material that is inadvertently moved upwards towards the rotary shaft **702** to be driven into the channel and then driven back down into the receptacle containing the components being mixed (not shown).

The distal end of the shaft (opposite to proximal end having a connection for attachment to a handheld drill or electric screwdriver) has a corkscrew effect neck **707** having an anticlockwise spiral nature. When electric drill (not shown) is rotating rotary shaft **702** in a clockwise direction, any solvent or loose material moving up rotary shaft **702** is driven back down under a vortex via the anticlockwise spirals of neck **707** towards the receptacle containing the components being mixed (not shown). Corkscrew effect neck **707** is designed as a final fail safe against any liquid mix being drawn up rotary shaft during the mixing process. The sleek curvature of neck **707** redirects any escaping liquids towards the receptacle containing the components being mixed (not shown) as neck **707** operates in an anticlockwise direction, moving against the main oscillation through redirecting the effects of the centrifugal force created by the loops mixing any given compound.

The apparatus **701** embodying the present invention provides a device that gives a much enhanced degree of mixing and also mixes in a shorter period of time. Using existing mixing techniques for plaster, for example, which require using a paddle, a forty kilogram container of plaster takes seven to ten minutes to mix. In contrast, the device embodying the present invention mixes a forty kilogram container of plaster in one minute, thus representing significant time savings. This is especially important with plaster which sets thirty minutes after water is added. Furthermore, in contrast to apparatus **701** embodying the present invention, existing plaster paddle-type mixing devices require the device to be moved up and down and oscillated in order to mix the plaster. The present proposal therefore provides both time saving and manpower saving advantages. Existing devices are difficult to clean, especially if not cleaned immediately after use. Hitting or tapping of tools can lead to them shattering, especially as current devices are usually entirely metallic. However, the present proposal also provides advantages in cleaning the device after mixing, as it can be cleaned by simply placing it in a bucket of water or solvent and operated by activating the handheld drill or electric screwdriver. Therefore, the present proposal provides advantages in enhanced mixing of the contents of a receptacle, quicker mixing of the contents of a receptacle and both easier and quicker cleaning of the device after use.

### Figure 8

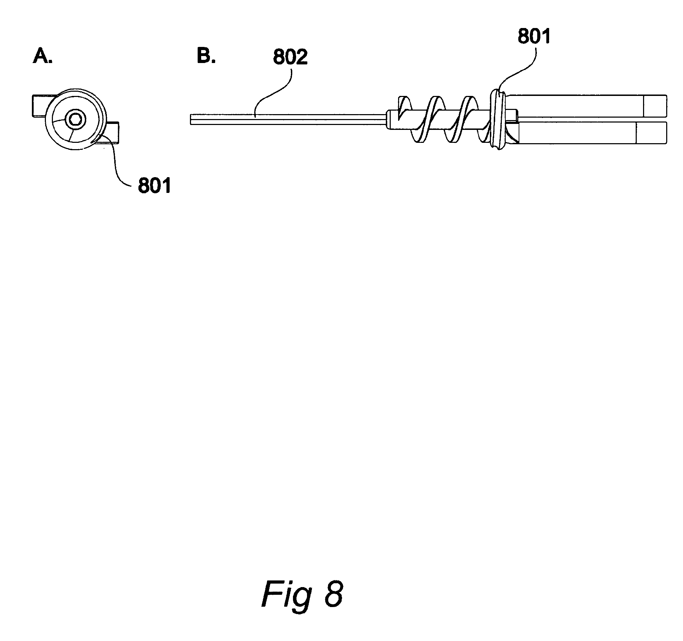

Figure 8 shows two representations of a portion of the apparatus embodying the present invention. Collar **801** is shown in Figure 8a. Collar **801** has a channelled cut out designed to assist the at least two arms in cutting through the mixture or components in the few moments prior to the arms extending and forming a blade as the apparatus is loaded under pressure. Collar **801** also acts as a catalyst to the mixing vortex that is formed once the blades are at full speed and extension during use.

An alternative view of collar **801** is shown in Figure 8b, showing the corkscrew nature which helps material that is inadvertently moved upwards towards the rotary shaft **802** to be driven into the channel of the collar **801** and then driven back down into the receptacle containing the components being mixed (not shown).

### Figure 9

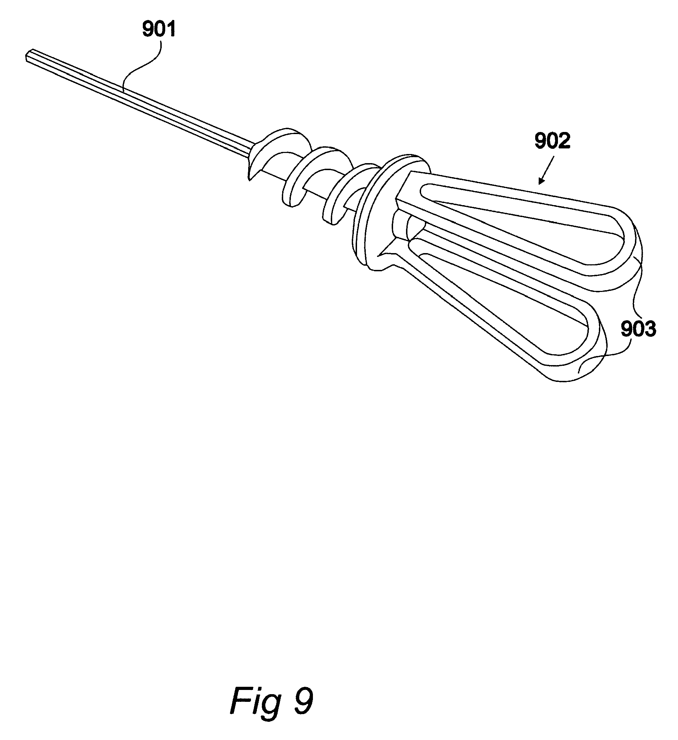

Figure 9 shows a perspective view of a second embodiment of the claimed invention. In this alternative embodiment, rotary shaft **901** has a proximal end and a distal end. Distal end of rotary shaft **901** further comprises mixing element **902**. Mixing element **902** comprises at least two arms **903**. The at least two arms **903** sit side by side, rather than in an overlapping state as in the main embodiment. This allows for the at least two arms **903** to be thicker, which is better for mixing viscous substances, for example, cement.

### Figure 10

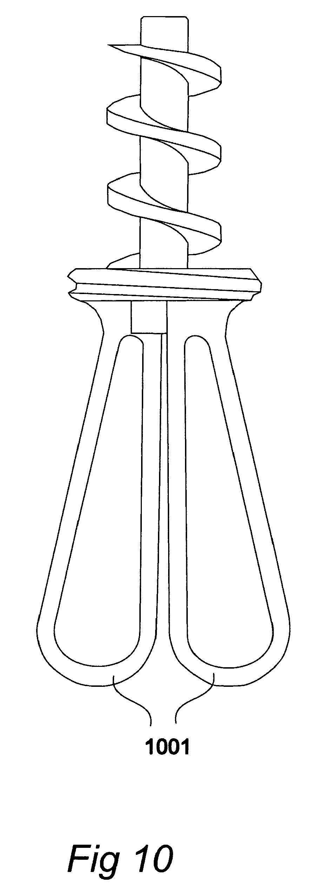

Figure 10 shows an alternative view of a second embodiment of the claimed invention. In this side profile, it can be seen that the at least two arms **1001** are not touching.

## Claims

1. An apparatus 701 for mixing contents of a receptacle, the apparatus comprising:
a rotary shaft 702 equipped at a proximal end with a connection for removable attachment to a means of providing rotation, the rotary shaft having a mixing element fixedly connected at a distal end of the shaft opposite to the proximal end,
the mixing element comprising at least two arms 704,
wherein the at least two arms 704 are retractable when in a resting position or extendable radially outwardly when in an operative rotating position, **characterised in that** the mixing element further comprises a corkscrew neck 707 positioned above the at least two arms and a collar 706 positioned above the at least two arms and beneath the corkscrew neck.

2. The apparatus of claim 1, wherein the means of providing rotation is a handheld drill or an electric screwdriver.

3. The apparatus of claim 1, wherein the at least two arms are fabricated from a flexible material.

4. The apparatus of claim 3, wherein the at least two arms are fabricated from nylon.

5. The apparatus of claim 1, wherein the mixing element is fixedly connected at the distal end of the shaft via an anchor nut positioned at the base of the distal end.

6. The apparatus of claim 1, wherein the mixing element is fixedly connected at the distal end of the shaft via at least one hole in said shaft.

7. The apparatus of claim 1, wherein the at least two arms are loops.

8. The apparatus of claim 7, wherein each loop further comprises raised ridges and/or grooves on an external surface and an internal surface.

9. The apparatus of claim 1, wherein the corkscrew neck comprises threads running in an anticlockwise direction.

10. The apparatus of claim 1, wherein the collar comprises an angled grooved channel.

11. The apparatus of claim 1, further comprising a handheld drill or electric screwdriver.

12. The apparatus of claim 11, wherein the at least two arms are configured to extend radially outwardly under centrifugal force when the handheld drill or electric screwdriver is in operation.

## Patentansprüche

1. Ein Gerät 701 zum Mixen des Inhalts eines Behälters, welches aus Folgendem besteht:
ein rotierender Schaft 702, am proximalen Ende versehen mit einem Anschluss, um das Gerät wiederabnehmbar an ein Rotation erzeugendes Instrument anzuschließen, am distalen Ende gegenüber dem proximalen Ende versehen mit einem fest fixierten Mixelement,
das Mixelement, bestehend aus mind. zwei Armen 704,
wobei die mind. zwei vorhandenen Arme 704 in Ruheposition einfahrbar und in rotierendem Betrieb sternförmig nach außen hin ausfahrbar sind. Das Mixelement zeichnet sich weiterhin durch einen Korkenzieherhals 707 oberhalb der mind. zwei Arme und einen Kragen 706 oberhalb der mind. zwei Arme und unterhalb des Korkenzieherhalses aus.

2. Das Gerät entsprechend Patentanspruch 1, wobei das Rotation erzeugende Instrument eine Handbohrmaschine oder ein elektrischer Schraubenzieher ist.

3. Das Gerät entsprechend Patentanspruch 1, wobei die mind. 2 Arme aus einem flexiblen Material bestehen.

4. Das Gerät entsprechend Patentanspruch 3, wobei die mind. 2 Arme aus Nylon bestehen.

5. Das Gerät entsprechend Patentanspruch 1, wobei das Mixelement mithilfe einer Ankermutter, welche sich am Fuße des distalen Endes befindet, fest am distalen Ende des Schafts angebracht ist.

6. Das Gerät entsprechend Patentanspruch 1, wobei das Mixelement fest mithilfe mind. eines Loches im Schaft am distalen Ende besagten Schafts befestigt ist.

7. Das Gerät entsprechend Patentanspruch 1, wobei die mind. zwei Arme schlaufenförmig sind.

8. Das Gerät entsprechend Patentanspruch 7, wobei jede Schlaufe Erhebungen und/oder Rillen auf einer äußeren Oberfläche und auf einer inneren Oberfläche aufweist.

9. Das Gerät entsprechend Patentanspruch 1, wobei der Korkenzieherhals aus Gewinden besteht, die entgegen dem Uhrzeigersinn laufen.

10. Das Gerät entsprechend Patentanspruch 1, wobei der Kragen über einen gewinkelten Kanal mit Rillen verfügt.

11. Das Gerät entsprechend Patentanspruch 1, außerdem über eine Handbohrmaschine oder einen elektrischen Schraubenzieher verfügend.

12. Das Gerät entsprechend Patentanspruch 11, wobei die mind. zwei Arme so konstruiert sind, dass sie unter Fliehkraft während des Betriebs der Handbohrmaschine oder des elektrischen Schraubenziehers sternförmig nach außen hin ausfahren.

## Revendications

1. Un appareil 701 pour mélanger le contenu d'un récipient, l'appareil comprenant:
un arbre rotatif 702 muni, à une extrémité proximale, d'un raccord permettant la fixation amovible à un dispositif rotatoire, l'arbre rotatif étant muni d'un dispositif de mélange raccordé fixement sur une extrémité distale de l'arbre faisant face à l'extrémité proximale,
le dispositif de mélange comprenant au moins deux bras 704,
où les au moins deux bras 704 étant rétractables, lorsqu'ils se trouvent en position de repos, ou extensibles radialement vers l'extérieur, lorsqu'ils se trouvent en position de rotation, **caractérisé en ce que** le dispositif de mélange comprend en outre un col en tire-bouchon 707 positionné au-dessus des au moins deux bras, et un collet 706 positionné au-dessus des au moins deux bras et au-dessous du col en tire-bouchon.

2. L'appareil selon la revendication 1, le dispositif rotatoire étant une perceuse portative ou un tournevis électrique.

3. L'appareil selon la revendication 1, les au moins deux bras étant fabriqués avec une matière flexible.

4. L'appareil selon la revendication 3, les au moins deux bras étant fabriqués en nylon.

5. L'appareil selon la revendication 1, le dispositif de mélange étant raccordé fixement à l'extrémité distale de l'arbre par le biais d'un écrou d'ancrage positionné sur la base de l'extrémité distale.

6. L'appareil selon la revendication 1, le dispositif de mélange étant raccordé fixement à l'extrémité distale de l'arbre à travers au moins un trou dans ledit arbre.

7. L'appareil selon la revendication 1, les au moins deux bras étant des boucles.

8. L'appareil selon la revendication 7, chaque boucle comprenant en outre des arêtes saillantes et/ou des cannelures sur une surface extérieure et une surface intérieure.

9. L'appareil selon la revendication 1, le col en tire-bouchon comprenant des filets à direction antihoraire.

10. L'appareil selon la revendication 1, le collet comprenant une gorge à cannelure inclinée.

11. L'appareil selon la revendication 1, comprenant en outre une perceuse portative ou un tournevis électrique.

12. L'appareil selon la revendication 11, les au moins deux bras étant configurés pour se déployer radialement vers l'extérieur sous une force centrifuge, lorsque la perceuse portative ou le tournevis électrique sont en marche.
